# FASCICULE DE BREVET EUROPEEN

(11) **EP 0 646 779 B1**
(45) Date de publication et mention de la délivrance du brevet: **10.06.1998**
(21) Numéro de dépôt: 94402184.9
(22) Date de dépôt: 29.09.1994
(51) Int. Cl.: G01K 3/00

(54) **Dispositif destiné à fournir l'image de l'échauffement produit par un élément chauffant électrique**
Vorrichtung zur Darstellung des Bildes der verursachten Erwärmung durch ein elektrisches Heizelement
Device for providing the image of the heating produced by an electrical heating element

(30) Priorité: 30.09.1993 FR 9311653
(43) Date de publication de la demande: 05.04.1995
(73) Titulaire: Girard, François Marie, F-21000 Dijon (FR)
(72) Inventeur: Girard, François Marie, F-21000 Dijon (FR)
(74) Mandataire: Bruder, Michel

(56) Documents cités:
- EP-A- 0 041 898
- DATABASE WPI Week 7802, Derwent Publications Ltd., London, GB; AN 78-03709 & SU-A-554 474 (AUTOGENWERK ZINSER) 19 Mai 1977

## Description

La présente invention concerne un dispositif destiné à fournir une image de l'échauffement produit par une source de chauffage électrique.

Dans de nombreux appareils électriques de chauffage, et notamment dans les dispositifs électriques soumis à asservissement, il est nécessaire d'effectuer une mesure de la quantité de chaleur délivrée par ces dispositifs. La plupart du temps on réalise une telle mesure au moyen d'une sonde, de type thermocouple ou CTN, que l'on dispose soit au voisinage immédiat de la source de chaleur soit en contact direct avec celle-ci.

De tels moyens de mesure présentent de notables inconvénients. En effet, notamment pour des raisons d'accessibilité, il est la plupart du temps difficile de disposer physiquement ladite sonde suffisamment près de la source de chaleur pour que la mesure effectuée soit significative, cette sonde devant, de plus, être démontable facilement, de façon à permettre son entretien et son remplacement.

Par ailleurs, les éléments chauffants étant alimentés en moyenne tension (de l'ordre de 220 volts), alors que les dispositifs électroniques fonctionnent sous basse tension (de l'ordre de 12 volts), il en résulte que, dans l'hypothèse où la sonde doit se trouver en contact avec l'élément chauffant ou avec un élément solidaire de celui-ci, il est nécessaire de prévoir des moyens d'isolation afin d'éviter la destruction du dispositif électronique sous l'effet d'une surtension. Il en résulte une certaine complication et un surcoût du prix de revient de l'appareil.

La présente invention a pour but de remédier à ces inconvénients en proposant un dispositif permettant d'obtenir l'image de l'échauffement produit par une source de chaleur électrique, image destinée à servir de référence, notamment à des moyens de régulation de la température.

La présente invention a ainsi pour objet un dispositif destiné à fournir l'image de l'échauffement produit par un élément chauffant électrique alimenté en courant par l'intermédiaire d'un semi-conducteur de puissance traversé par un courant proportionnel au courant d'alimentation de l'élément chauffant (1), caractérisé en ce qu'il comprend un élément conducteur de la chaleur, en contact thermique avec le semi-conducteur de puissance, et un capteur sensible à la chaleur, en contact thermique avec l'élément conducteur de la chaleur, et disposé à une distance donnée du semi-conducteur de puissance, cette distance étant fonction de l'inertie thermique à reproduire de l'élément chauffant

Dans un mode de mise en oeuvre de l'invention l'élément conducteur de la chaleur est constitué par le radiateur de refroidissement, ou dissipateur, du semi-conducteur.

Dans un autre mode de mise en oeuvre de l'invention le dispositif comprend des moyens de réglage de la distance séparant le semi-conducteur de puissance dudit capteur.

On décrira ci-après une forme d'exécution de la présente invention, en référence au dessin annexé sur lequel :

La figure 1 est une représentation schématique d'un mode de mise en oeuvre de l'invention.

La figure 2 est une vue de détail partielle en perspective d'un mode de mise en oeuvre de l'invention.

La figure 3 est un graphique représentant la variation, en fonction du temps, de la température de l'élément chauffant et de celle existant en trois zones différentes de l'élément conducteur plus ou moins éloignées du semi-conducteur de puissance.

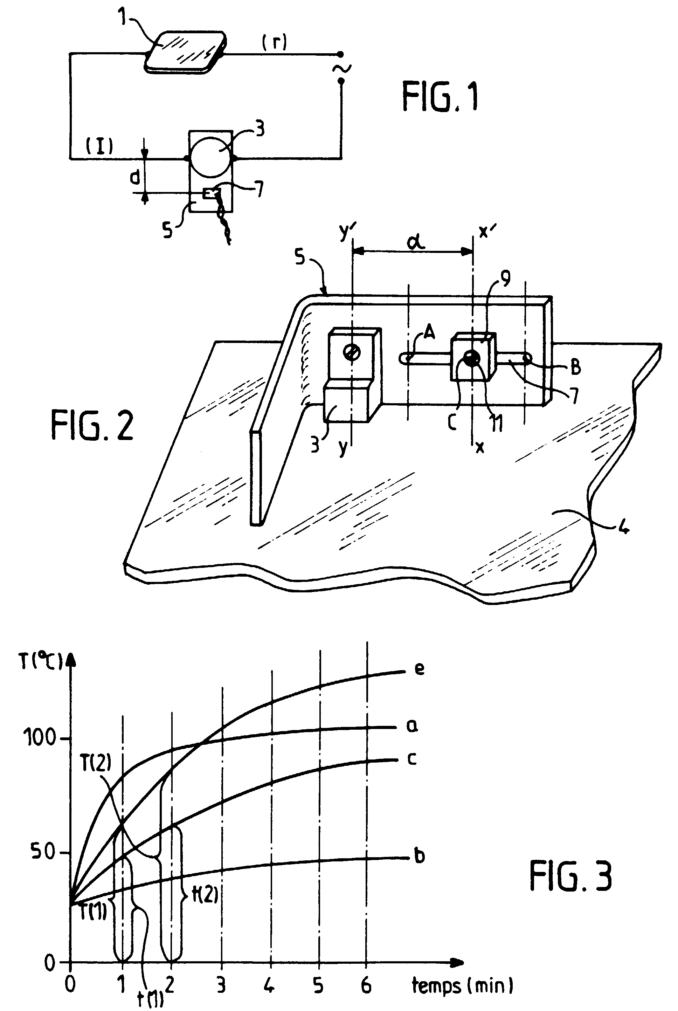

On a ainsi représenté, sur les figures 1 et 2, une plaque chauffante électrique 1 alimentée en courant alternatif par l'intermédiaire d'un semi-conducteur de puissance constitué d'un triac 3. Le triac 3 est disposé sur un circuit imprimé 4 et est fixé sur un radiateur de refroidissement, ou dissipateur 5, constitué d'une bande d'aluminium pliée à angle droit, elle-même fixée sur le circuit imprimé 4.

Le dissipateur 5 est percé d'une lumière allongée 7 sensiblement parallèle au circuit imprimé 4. Un capteur thermique 9, par exemple une sonde à coefficient de température négatif (CTN), ou positif (CTP), est solidarisé du dissipateur 5 par un boulon 11 qui traverse la lumière 7. Le capteur 9 est ainsi en mesure d'être fixé dans une position variable et réglable à une distance d du triac 3 le long de la lumière 7.

Le capteur 9 est successivement disposé en trois positions caractéristiques, à savoir une position A la plus proche du triac 3, une position B la plus éloignée du triac 3 et une position C médiane entre les deux positions précédentes. Pour ces trois positions on relève la variation de la température en fonction du temps subie par le capteur 9 au cours de l'échauffement de la plaque 1, et l'on trace les courbes a,b,c correspondant à la variation de la température du dissipateur 5 en fonction du temps, respectivement aux points A,B,C considérés.(Figure 3). On relève également les variations, en fonction du temps, de la température prise par la plaque chauffante 1 et l'on reporte ces variations sur une courbe e de la figure 3.

On constate qu'en début de mesure la courbe a caractéristique de la température du dissipateur 5 au point A s'élève au-dessus de la courbe e représentant l'échauffement de la plaque 1, alors qu'en fin de mesure on assiste à l'effet inverse. Ce phénomène s'explique par le fait, qu'en raison de la proximité du capteur 9 et du triac 3 l'inertie thermique du matériau compris entre ces deux éléments est plus faible que l'inertie thermique de la plaque chauffante 1, si bien que la température s'élève plus rapidement au point A. En fin de mesure on assiste au phénomène inverse.

On ne peut donc pas dire que le capteur thermique 9 enregistre au point A une image de l'échauffement subi par la plaque chauffante 1.

Sur la courbe b on constate que, contrairement à l'exemple précédent, la température au point B du dissipateur 5 augmente à tout moment moins vite que la température de la plaque 1 (courbe e), comme on peut aisément le constater sur la figure 3. Cela montre que, en déplaçant le capteur 9 du point A vers le point B, on augmente l'inertie de la mesure de température fournie par le capteur 9.

Sur la courbe c, correspondant à la position médiane du capteur 9 au point C du dissipateur 5, et pour une série d'instants successifs donnés, (1, 2, 3, 4, 5, 6 min) on réalise respectivement, pour chaque point, le rapport de la température T(1), T(2),...T(n) prise par la plaque chauffante 1 sur la température t(1), t(2)...t(n) prise au même instant par le capteur thermique 9. On constate que ce rapport reste quasiment constant dans le temps (voisin de 1,3). L'échauffement du capteur 9 est donc bien ici l'image de l'échauffement subi par la plaque chauffante 1, et il est dès lors possible d'utiliser la mesure de l'échauffement de ce capteur 9, pour assurer le contrôle et la régulation de la plaque chauffante 1.

Un avantage important de la présente invention est qu'elle permet de réaliser la mesure de la température d'un élément chauffant au sein même des moyens électroniques de l'appareil comportant le semi-conducteur de puissance ce qui, d'une part, simplifie le montage en supprimant une liaison électrique et, d'autre part, simplifie la maintenance et l'entretien du capteur thermique, puisque l'accès au dispositif électronique est plus facile que l'accès à l'élément chauffant.

Pour des applications qui nécessitent une grande précision, on pourra faire appel à un capteur thermique dont la position par rapport au semi-conducteur peut être réglée à l'aide de moyens de coulissement ou de tout autre moyen approprié. Cependant, dans les applications de série, après avoir effectué des mesures permettant de déterminer la distance optimale do entre le semi-conducteur et le capteur thermique , on positionnera celui-ci de façon fixe à ladite position optimale do.

## Revendications

1. Dispositif destiné à fournir l'image de l'échauffement produit par un élément chauffant électrique (1) alimenté en courant (I) par l'intermédiaire d'un semi-conducteur de puissance (3) traversé par un courant (I') proportionnel au courant d'alimentation (I) de l'élément chauffant (1), caractérisé en ce qu'il comprend un élément conducteur de la chaleur (5), en contact thermique avec le semi-conducteur de puissance (3), et un capteur (9) sensible à la chaleur, en contact thermique avec l'élément conducteur de la chaleur (5), et disposé à une distance donnée (d) du semi-conducteur de puissance (3), cette distance étant fonction de l'inertie thermique à reproduire de l'élément chauffant(1).

2. Dispositif suivant la revendication 1 caractérisé en ce que l'élément conducteur de la chaleur est constitué par le radiateur de refroidissement, ou dissipateur (5), du semi-conducteur (3).

3. Dispositif suivant l'une des revendications précédentes caractérisé en ce qu'il comprend des moyens de réglage de la distance (d) séparant le semi-conducteur de puissance (3) dudit capteur (9).

4. Dispositif suivant la revendication 3 caractérisé en ce que les moyens de réglage sont constitués d'une lumière allongée (7) prévue dans le dissipateur (5) permettant le coulissement de moyens de fixation (11) dudit capteur (9).

## Patentansprüche

1. Vorrichtung zur Nachbildung der durch ein elektrisches Heizelement (1) erzeugten Erwärmung, welches mit Hilfe eines Leistungshalbleiters (3) mit einem Strom (I) versorgt wird, der proportional zu dem den Leistungshalbleiter durchfließenden Strom (I') ist, **gekennzeichnet durch** ein in thermischem Kontakt mit dem Leistungshalbleiter (3) stehendes wäremeleitendes Element (5) und einen mit dem wärmeleitenden Element (5) in thermischem Kontakt stehenden Wärmesensor (9), der in einem gegebenen Abstand (d) vom Leistungshalbleiter (3) angeordnet ist, wobei dieser Abstand von der thermischen Trägheit des Heizelementes (1) abhängt.

2. Vorrichtung nach Anspruch 1, **dadurch gekennzeichnet,** daß das wärmeleitende Element durch den Strahlungskühler oder Kühlkörper (5) des Halbleiters (3) gebildet wird.

3. Vorrichtung nach einem der vorstehenden Ansprüche, **gekennzeichnet durch** eine Einrichtung zum Einstellen des Abstands (d) zwischen dem Leistungshalbleiter (3) und dem Sensor (9).

4. Vorrichtung nach Anspruch 3, **dadurch gekennzeichnet**, daß die Einstelleinrichtung ein im Kühlkörper (5) vorgesehenes Langloch (7) aufweist.

## Claims

1. Device for providing the image of the heating produced by an electrical heating element (1) supplied with current (I) via a power semi-conductor (3) traversed by a current (I') proportional to the supply current (I) of the heating element (1), characterized in that it comprises a heat-conducting element (5), in thermal contact with the power semi-conductor (3), and a heat-sensitive sensor (9), in thermal contact with the heat-conducting element (5), and disposed at a given distance (d) from the power semi-conductor (3), this distance being a function of the thermal inertia of the heating element (1) to be reproduced.

2. Device according to Claim 1, characterized in that the heat-conducting element is constituted by the cooling radiator, or dissipator (5), of the semi-conductor (3).

3. Device according to one of the preceding Claims, characterized in that it comprises means for adjusting the distance (d) separating the power semi-conductor (3) from said sensor (9).

4. Device according to Claim 3, characterized in that the adjusting means are constituted by an elongated slot (7) provided in the dissipator (5) allowing the slide of means (11) for fixing said sensor (9).
